# EUROPÄISCHE PATENTSCHRIFT

(11) **EP 4 488 749 B1**
(45) Veröffentlichungstag und Bekanntmachung des Hinweises auf die Patenterteilung: **09.12.2026**
(21) Anmeldenummer: 24174006.7
(22) Anmeldetag: 03.05.2024
(51) Int. Cl.: G02F 1/13357

(54) **ANZEIGEVORRICHTUNG UND FORTBEWEGUNGSMITTEL**
DISPLAY DEVICE AND MEANS OF TRANSPORTATION
DISPOSITIF D'AFFICHAGE ET MOYEN DE LOCOMOTION

(30) Priorität: 03.07.2023 DE 102023206277
(43) Veröffentlichungstag der Anmeldung: 08.01.2025
(73) Patentinhaber: AUMOVIO Germany GmbH, 60488 Frankfurt am Main (DE)
(72) Erfinder: Joseph, Manrico, 30175 Hannover (DE); Jakoby, Oliver, 30175 Hannover (DE); Kalender, Sait, 30175 Hannover (DE); Thomas, Jörg, 30175 Hannover (DE); Nowak, Martin Thomas, 339780 Singapore (SG); Thiel, Kerstin, 30175 Hannover (DE)
(74) Vertreter: Aumovio Corporation

(56) Entgegenhaltungen:
- EP-B1- 2 191 521
- US-A1- 2010 061 087

## Beschreibung

Die vorliegende Erfindung betrifft eine Anzeigevorrichtung sowie ein Fortbewegungsmittel mit einer solchen Anzeigevorrichtung.

Anzahl und Fläche von Anzeigevorrichtungen in Fortbewegungsmitteln steigen ständig an. Anzeigevorrichtungen sind beispielsweise als Kombiinstrument für den Fahrer, als Zentraldisplay und auch als Beifahrerdisplay im Markt anzutreffen. Nicht-selbstleuchtende transmissive Anzeigevorrichtungen benötigen zur Bilddarstellung eine Hintergrundbeleuchtung. Die Aufgabe der Hintergrundbeleuchtung ist es dabei, das verwendete Anzeigepaneel so gleichförmig wie möglich über die gesamte aktive Fläche zu beleuchten, um eine möglichst homogene Anzeige bis in den Randbereich zu erzeugen.

Matrix-Hintergrundbeleuchtungen nutzen eine Vielzahl von in einer Matrix angeordneten Lichtquellen zur Lichterzeugung. Mittels eines Reflektors wird das Licht der Lichtquellen dabei in Richtung des Anzeigepaneels gelenkt.

Beispielsweise beschreibt US 2020/0287109 A1 eine Hintergrundbeleuchtung für ein Anzeigepaneel. Die Hintergrundbeleuchtung weist einen Reflektor mit einer Vielzahl von regelmäßig geformten und in einem Raster angeordneten reflektierend ausgestalteten Kavitäten auf. Die Höhe des Reflektors nimmt zu den Ecken der Kavitäten hin ab.

DE 10 2007 007 353 A1 beschreibt eine Beleuchtungseinrichtung mit einer Leuchtfläche, die aus einer Vielzahl von Strahlungsreflektoren modulartig zusammensetzbar ist. Vorzugsweise werden wabenförmige, schuppenförmige, dreieckförmige oder rechteckförmige Strahlungsreflektoren verwendet. Jeder der Strahlungsreflektoren weist mehrere strahlungsreflektierende Flächen auf, die, von einem Zentrum ausgehend, in dem eine Lichtquelle angeordnet ist, nach außen gewölbt sind.

Die US 2010/061087 A1 zeigt bereits eine Anzeigeeinrichtung gemäß Oberbegriff von Anspruch 1.

Die EP 2 191 521 B1 lehrt, dass seitlich emittierende Leuchtdioden, die in den Vertiefungen eines Reflektors positioniert sind, für eine dünnere Hintergrundbeleuchtung mit verbesserter Beleuchtungshomogenität verwendet werden können.

In der Praxis hat sich gezeigt, dass die derzeit verfügbaren Hintergrundbeleuchtungen zwar eine relativ gleichförmige Ausleuchtung des Anzeigepaneels erzielen, für das menschliche Auge aber Gitterstrukturen in der Ausleuchtung erkennbar sind. Diese werden vom Betrachter als störend wahrgenommen.

Es ist eine Aufgabe der Erfindung, eine verbesserte Anzeigevorrichtung mit einer Matrix-Hintergrundbeleuchtung bereitzustellen.

Diese Aufgabe wird durch eine Anzeigevorrichtung mit den Merkmalen des Anspruchs 1 und durch ein Fortbewegungsmittel gemäß Anspruch 7 gelöst. Bevorzugte Ausgestaltungen der Erfindung sind Gegenstand der abhängigen Ansprüche.

Gemäß einem ersten Aspekt der Erfindung weist eine Anzeigevorrichtung ein Anzeigepaneel und eine Hintergrundbeleuchtung für das Anzeigepaneel auf, wobei die Hintergrundbeleuchtung aufweist:
- einen Reflektor mit einer Vielzahl von reflektierend ausgestalteten Kavitäten, wobei Wände der Kavitäten derart ausgestaltet sind, dass eine aus der Anordnung der Kavitäten resultierende Gitterstruktur des Reflektors aufgebrochen wird; und
- eine Vielzahl von jeweils in den Kavitäten angeordneten Lichtquellen.

Bei der erfindungsgemäßen Lösung ist ein Reflektor zwischen den Lichtquellen und dem Anzeigepaneel angeordnet, der die bauartbedingte Lücke zwischen den Lichtquellen und dem Anzeigepaneel oder einer weiteren unterhalb des Anzeigepaneels angeordneten optischen Komponente füllt. Dieser Reflektor weist eine Vielzahl von reflektierend ausgestalteten Kavitäten auf, in denen jeweils zumindest eine Lichtquelle angeordnet ist. Die Kavitäten orientieren das aus den Lichtquellen austretende Licht in Richtung des Anzeigepaneels. Die Wände der Kavitäten sind derart ausgestaltet, dass für einen Betrachter der Anzeigevorrichtung keine regelmäßige Gitterstruktur des Reflektors erkennbar ist. Um dies zu erreichen, sind die Wände der Kavitäten bzw. die aus Sicht des Betrachters oberen Ränder der Kavitäten so ausgestaltet, dass lange, sich kreuzende gerade Linien vermieden werden. Für das menschliche Auge ist es dadurch nicht möglich, die einzelnen Linien zu einer störenden langen geraden Linie zu adaptieren. Für die Herstellung des Reflektors stehen zahlreiche Technologien zur Herstellung. Beispielsweise kann der Reflektor als mittels Spritzguss produziertes Kunststoffbauteil, als Silikonbauteil oder als geformte Folie realisiert werden.

Gemäß einem bevorzugten Aspekt der Erfindung sind benachbarte Kavitäten jeweils unterschiedlich ausgestaltet. Bei dieser Ausführungsform weisen aneinandergrenzende Kavitäten beispielsweise jeweils eine unterschiedliche Form auf. Dabei können zum Beispiel mehrere Kavitäten einen Block bilden, z.B. 2×2 Kavitäten. Der Reflektor kann beispielsweise dann eine Vielzahl solcher Blöcke umfassen. Dies reduziert den erforderlichen Aufwand für das Designen des Reflektors.

Gemäß einem Aspekt der Erfindung bilden die aus Sicht des Betrachters oberen Ränder der Kavitäten unregelmäßige Vielecke. Bei dieser Ausführungsform werden die Kavitäten so durch Vielecke gebildet, z.B. durch Fünfecke, dass durchgehende bzw. lange gerade Linien konstruktiv vermieden werden. Zwar weisen die oberen Ränder der Kavitäten dabei zahlreiche gerade Abschnitte auf, die sich auch über mehr als eine Kavität erstrecken können, diese werden vom Auge des Betrachters aber nicht als durchgehende gerade Linien wahrgenommen.

Gemäß einem Aspekt der Erfindung weisen die aus Sicht des Betrachters oberen Ränder der Kavitäten einen gekrümmten Verlauf auf und die Kavitäten sind ineinander verschachtelt.

Durch einen solchen gekrümmten Verlauf können mit dem Auge wahrnehmbare gerade Linien vollständig vermieden werden.

Insbesondere bei einem gekrümmten Verlauf der oberen Ränder der Kavitäten sind die Kavitäten puzzleartig ineinander verschachtelt. Dies hat den Vorteil, dass alle Kavitäten die gleiche Form haben können, abgesehen gegebenenfalls von einem Randbereich des Reflektors, und dennoch eine Adaption der oberen Ränder der Kavitäten zu Linien bzw. zu einem Gitter für das menschliche Auge stark erschwert ist.

Gemäß einem bevorzugten Aspekt der Erfindung weisen die Lichtquellen eine regelmäßige Anordnung auf. Eine regelmäßige Anordnung der Lichtquellen, beispielsweise in einer regelmäßigen Punktmatrix oder in einer Mehrzahl regelmäßiger Linien, vereinfacht den Entwurf einer Leiterplatte, auf der die Lichtquellen angeordnet sind. Zudem wird eine Berechnung der Steuersignale für die Lichtquellen vereinfacht, die für eine homogene Ausleuchtung des Anzeigepaneels erforderlich sind.

Gemäß einem anderen bevorzugten Aspekt der Erfindung sind Wände der Kavitäten verrundetet und die Kavitäten sind ausgestaltet, das von den Lichtquellen emittierte Licht in Richtung des Anzeigepaneels zu reflektieren. Durch die Verrundung kann das emittierte Licht gezielter in Richtung des Anzeigepaneels reflektiert werden.

Gemäß einem weiteren bevorzugten Aspekt der Erfindung sind die Lichtquellen seitlich emittierende Leuchtdioden. Die Verwendung von seitlich emittierenden Leuchtdioden hat den Vorteil, dass eine Ausbildung von Lichtspots in der Hintergrundbeleuchtung verhindert wird. Dies sorgt für eine besonders homogen wirkende Beleuchtung des Anzeigepaneels.

Gemäß einem weiteren bevorzugten Aspekt der Erfindung emittieren die seitlich emittierenden Leuchtdioden allseitig Licht. Dies sorgt für eine zusätzliche Steigerung der Homogenität der Ausleuchtung des Anzeigepaneels.

Vorzugsweise wird eine erfindungsgemäße Anzeigevorrichtung in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch einen Querschnitt einer Anzeigevorrichtung;
- Fig. 2: zeigt schematisch eine Detailansicht der Anzeigevorrichtung;
- Fig. 3: zeigt schematisch einen Reflektor einer bekannten Anzeigevorrichtung;
- Fig. 4: zeigt schematisch eine erste Ausführungsform eines Reflektors einer erfindungsgemäßen Anzeigevorrichtung;
- Fig. 5: zeigt schematisch eine zweite Ausführungsform eines Reflektors einer erfindungsgemäßen Anzeigevorrichtung;
- Fig. 6: zeigt schematisch eine dritte Ausführungsform eines Reflektors einer erfindungsgemäßen Anzeigevorrichtung;
- Fig. 7: zeigt schematisch eine vierte Ausführungsform eines Reflektors einer erfindungsgemäßen Anzeigevorrichtung; und
- Fig. 8: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

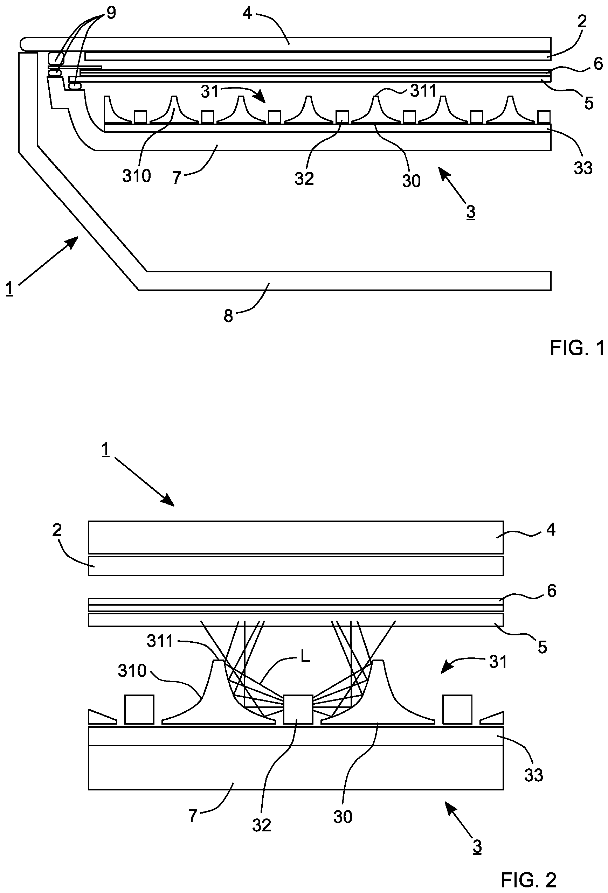

Fig. 1 zeigt schematisch einen Querschnitt einer Anzeigevorrichtung 1. Die Anzeigevorrichtung 1 weist ein Anzeigepaneel 2 auf, das mit einem Deckglas 4 verklebt ist. Das Deckglas 4 schließt ein Gehäuse 8 der Anzeigevorrichtung 1 gegenüber der Umgebung ab. In einem weiteren Gehäuse 7 ist eine Hintergrundbeleuchtung 3 für das Anzeigepaneel 2 angeordnet. Die Hintergrundbeleuchtung 3 weist einen Reflektor 30 mit einer Vielzahl von Kavitäten 31 auf. Die Wände 310 der Kavitäten 31 bzw. die aus Sicht des Betrachters oberen Ränder 311 der Kavitäten 31 sind derart ausgestaltet, dass lange, sich kreuzende gerade Linien vermieden werden und für einen Betrachter der Anzeigevorrichtung 1 keine regelmäßige Gitterstruktur des Reflektors 30 erkennbar ist. In den Kavitäten 31 ist jeweils eine Lichtquelle 32 angeordnet, typischerweise eine Leuchtdiode. Die Lichtquellen 32 sind auf einer Leiterplatte 33 angeordnet, die mit dem Gehäuse 7 der Hintergrundbeleuchtung 3 verklebt sein kann. Zwischen der Hintergrundbeleuchtung 3 und dem Anzeigepaneel 2 befindet sich im dargestellten Beispiel eine optische Platte 5 mit einem darauf angeordneten optischen Folienstapel 6. Die Folien des optischen Folienstapels 6 haben die Aufgabe, das Licht aus dem Reflektor 30 so zu streuen, zu sammeln oder zu richten, dass die Anforderungen an die Raumwinkel der Hintergrundbeleuchtung 3 erfüllt werden. Typische Folien zur Lichtausrichtung sind Helligkeitsverbesserungsfilme (engl. Brightness Enhancement Film, BEF) und Lichtkontrollfilme (engl. Light Control Film, LCF). Bei der optischen Platte 5 handelt es sich um eine transparente Platte, die den optischen Abstand zwischen dem optischen Folienstapel 6 und den Lichtquellen 32 sicherstellt. Das Deckglas 4, die optische Platte 5 und das Gehäuse 7 der Hintergrundbeleuchtung 3 sind durch geeignete Verbindungselemente 9, z.B. Verklebungen, miteinander verbunden.

Fig. 2 zeigt schematisch eine Detailansicht der Anzeigevorrichtung 1. Zu sehen sind das Deckglas 4 mit dem Anzeigepaneel 2, die optische Platte 5 mit dem optischen Folienstapel 6 und die Hintergrundbeleuchtung 3 mit dem Gehäuse 7, der Leiterplatte 33 mit den darauf angeordneten Lichtquellen 32 und dem Reflektor 30. Bei den Lichtquellen 32 handelt es sich hier um seitlich emittierende Leuchtdioden, die vorzugsweise allseitig Licht L emittieren. Die reflektierend ausgestalteten Wände 310 der Kavitäten 31 des Reflektors 30 sind verrundet ausgestaltet und orientieren das aus den Lichtquellen 32 austretende Licht L in Richtung des Anzeigepaneels 2. In einer exemplarischen Ausgestaltung liegt die gesamte Aufbauhöhe der Anzeigevorrichtung 1 vorzugsweise im Bereich von ~13,3 mm. Die Höhe des Reflektors 30 kann ~3,72 mm betragen, die Breite der Wände 33 an ihrer breitesten Stelle ~6,13 mm. Der Abstand zwischen dem Folienstapel 6 und dem Anzeigepaneel 2 beträgt z.B. ~1,31 mm, der Abstand zwischen dem Reflektor 30 und der optischen Platte 5 kann bei ~1,05 mm liegen. Der Abstand zwischen den Lichtquellen 32 kann z.B. ~9,13 mm betragen.

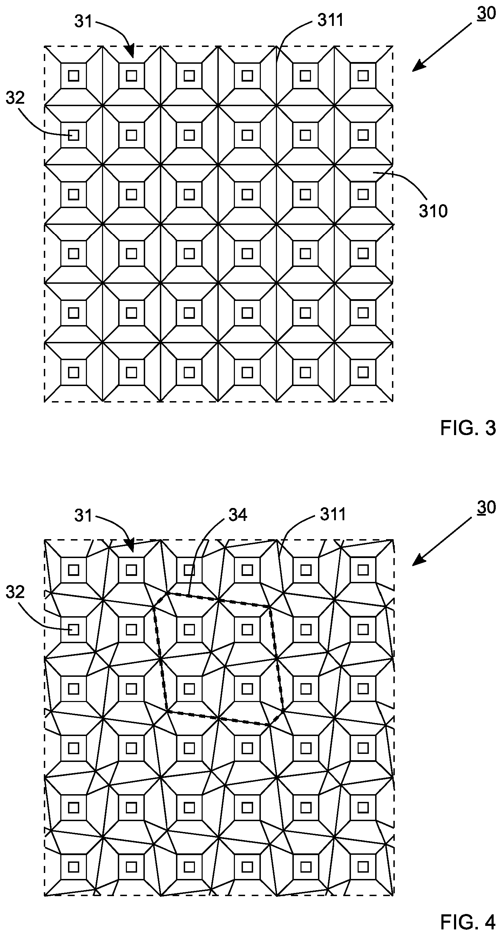

Fig. 3 zeigt schematisch einen Reflektor 30 einer bekannten Anzeigevorrichtung. Der Reflektor 30 weist eine Vielzahl von Kavitäten 31 auf, in denen jeweils eine Lichtquelle 32 angeordnet ist. Die Kavitäten 31 sind regelmäßig geformt und in einem regelmäßigen Raster angeordnet. Die Wände 310 der Kavitäten 31 bzw. die oberen Ränder 311 der Kavitäten 31 bilden jeweils ein Quadrat. Aus der Anordnung und Form der Kavitäten 31 resultiert eine regelmäßige Gitterstruktur aus langen gekreuzten Linien. Diese Gitterstruktur wird vom Betrachter als störend wahrgenommen.

Fig. 4 zeigt schematisch eine erste Ausführungsform eines Reflektors 30 einer erfindungsgemäßen Anzeigevorrichtung. Bei dieser Ausführungsform sind benachbarte Kavitäten 31 jeweils unterschiedlich ausgestaltet. Dadurch wird die regelmäßige Gitterstruktur des Reflektors 30 aufgebrochen, d.h. für den Betrachter der Anzeigevorrichtung ist keine regelmäßige Gitterstruktur erkennbar. Im dargestellten Beispiel bilden die aus Sicht des Betrachters oberen Ränder 311 der Kavitäten 31 unregelmäßige Vielecke, hier unregelmäßige Fünfecke. Zwar treten gerade Linien auf, diese erstrecken sich hier aber über maximal zwei Kavitäten 31. Jeweils vier Kavitäten 31 bilden einen Block 34, der durch eine gestrichelte Linie angedeutet ist. Der Reflektor 30 umfasst eine Vielzahl solcher Blöcke 34. Gut zu erkennen ist, dass die Lichtquellen 32 eine regelmäßige Anordnung aufweisen. In diesem Fall sind die Lichtquellen 32 in einer regelmäßigen Punktmatrix angeordnet.

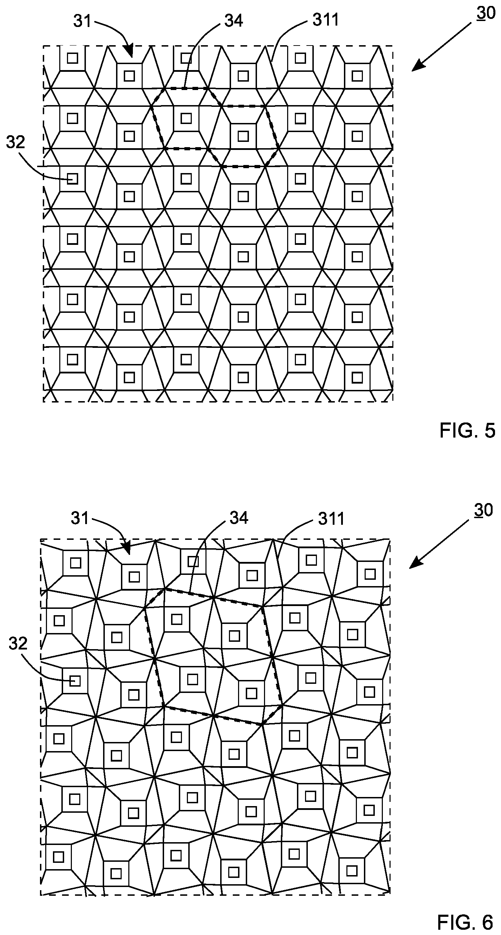

Fig. 5 zeigt schematisch eine zweite Ausführungsform eines Reflektors 30 einer erfindungsgemäßen Anzeigevorrichtung. Auch bei dieser Ausführungsform sind benachbarte Kavitäten 31 jeweils unterschiedlich ausgestaltet. Im dargestellten Beispiel bilden die aus Sicht des Betrachters oberen Ränder 311 der Kavitäten 31 unregelmäßige Sechsecke. Zwar treten gerade Linien auf, diese erstrecken sich hier aber über maximal eine Kavität 31.Jeweils zwei Kavitäten 31 bilden einen Block 34, der durch eine gestrichelte Linie angedeutet ist. Die Lichtquellen 32 weisen wiederum eine regelmäßige Anordnung auf. In diesem Fall sind die Lichtquellen 32 jedoch nicht in einer regelmäßigen Punktmatrix angeordnet, sondern in einer Mehrzahl regelmäßiger Linien.

Fig. 6 zeigt schematisch eine dritte Ausführungsform eines Reflektors 30 einer erfindungsgemäßen Anzeigevorrichtung. Wie zuvor sind benachbarte Kavitäten 31 jeweils unterschiedlich ausgestaltet. Die aus Sicht des Betrachters oberen Ränder 311 der Kavitäten 31 bilden jeweils unregelmäßige Fünfecke, wobei jeweils vier Kavitäten 31 einen Block bilden. Die Lichtquellen 32 weisen wiederum eine regelmäßige Anordnung in einer Mehrzahl regelmäßiger Linien auf.

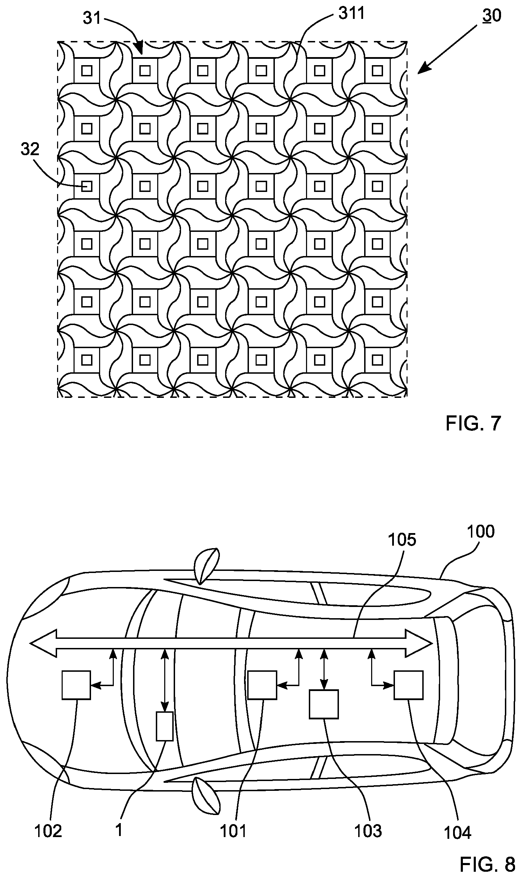

Fig. 7 zeigt schematisch eine vierte Ausführungsform eines Reflektors 30 einer erfindungsgemäßen Anzeigevorrichtung. Bei dieser Ausführungsform weisen die aus Sicht des Betrachters oberen Ränder 311 der Kavitäten 31 einen gekrümmten Verlauf auf. Die Kavitäten 31 sind dabei puzzleartig ineinander verschachtelt. Abgesehen gegebenenfalls von einem Randbereich des Reflektors 30 haben in diesem Beispiel alle Kavitäten 31 die gleiche Form. Die Lichtquellen 32 sind zudem in einer regelmäßigen Punktmatrix angeordnet. Da aber keine geraden Linien auftreten, wird auch hier die regelmäßige Gitterstruktur des Reflektors 30 aufgebrochen.

Fig. 8 zeigt schematisch ein Fortbewegungsmittel 100, das eine erfindungsgemäße Anzeigevorrichtung 1 nutzt. Bei dem Fortbewegungsmittel 100 handelt es sich in diesem Beispiel um ein Kraftfahrzeug. Das Kraftfahrzeug weist eine erfindungsgemäße Anzeigevorrichtung 1 auf, die in einer Armaturentafel angeordnet ist. Mit einer Sensorik 101 können Daten zur Fahrzeugumgebung erfasst werden. Die Sensorik 101 kann insbesondere Sensoren zur Umfelderkennung umfassen, z.B. Ultraschallsensoren, Laserscanner, Radarsensoren, Lidarsensoren oder Kameras. Die von der Sensorik 101 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 102, durch das Positionsinformationen bereitgestellt werden können, sowie eine Datenübertragungseinheit 103. Mittels der Datenübertragungseinheit 103 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 104 vorhanden. Der Datenaustausch zwischen den verschiedenen Komponenten des Kraftfahrzeugs erfolgt über ein Netzwerk 105.

### Bezugszeichenliste

- 1: Anzeigevorrichtung
- 2: Anzeigepaneel
- 3: Hintergrundbeleuchtung
- 30: Reflektor
- 31: Kavität
- 310: Wand
- 311: Oberer Rand
- 32: Lichtquelle
- 33: Leiterplatte
- 34: Block
- 4: Deckglas
- 5: Optische Platte
- 6: Folienstapel
- 7: Gehäuse der Hintergrundbeleuchtung
- 8: Gehäuse der Anzeigevorrichtung
- 9: Verbindungselement
- 100: Fortbewegungsmittel
- 101: Sensorik
- 102: Navigationssystem
- 103: Datenübertragungseinheit
- 104: Speicher
- 105: Netzwerk
- L: Licht

## Patentansprüche

1. Anzeigevorrichtung (1) mit einem Anzeigepaneel (2) und einer Hintergrundbeleuchtung (3) für das Anzeigepaneel (2), wobei die Hintergrundbeleuchtung (3) aufweist:
- einen Reflektor (30) mit einer Vielzahl von reflektierend ausgestalteten Kavitäten (31), wobei Wände (310) der Kavitäten (31) derart ausgestaltet sind, dass eine aus der Anordnung der Kavitäten (31) resultierende Gitterstruktur des Reflektors (30) aufgebrochen wird; und
- eine Vielzahl von jeweils in den Kavitäten (31) angeordneten Lichtquellen (32), **dadurch gekennzeichnet, dass**
- die aus Sicht des Betrachters oberen Ränder (311) der Kavitäten (31) unregelmäßige Vielecke bilden oder
- die aus Sicht des Betrachters oberen Ränder (311) der Kavitäten (31) einen gekrümmten Verlauf aufweisen und die Kavitäten (31) ineinander verschachtelt sind.

2. Anzeigevorrichtung (1) gemäß Anspruch 1, wobei benachbarte Kavitäten (31) jeweils unterschiedlich ausgestaltet sind.

3. Anzeigevorrichtung (1) gemäß einem der vorherigen Ansprüche, wobei die Lichtquellen (32) eine regelmäßige Anordnung aufweisen.

4. Anzeigevorrichtung (1) gemäß einem der vorherigen Ansprüche, wobei die Wände (310) der Kavitäten (31) verrundetet sind und die Kavitäten (31) ausgestaltet sind, das von den Lichtquellen (32) emittierte Licht (L) in Richtung des Anzeigepaneels (2) zu reflektieren.

5. Anzeigevorrichtung (1) gemäß Anspruch 4, wobei die Lichtquellen (32) seitlich emittierende Leuchtdioden sind.

6. Anzeigevorrichtung (1) gemäß Anspruch 4, wobei die seitlich emittierenden Leuchtdioden allseitig Licht (L) emittieren.

7. Fortbewegungsmittel (100) mit einer Anzeigevorrichtung (1) gemäß einem der vorherigen Ansprüche.

## Claims

1. A display device (1) comprising a display panel (2) and a backlight (3) for the display panel (2), wherein the backlight (3) has:
- a reflector (30) comprising a plurality of reflectively configured cavities (31), wherein walls (310) of the cavities (31) are configured such that a grid structure of the reflector (30) resulting from the arrangement of the cavities (31) is broken up; and
- a plurality of light sources (32), arranged in each case in the cavities (31), **characterised in that**
- the upper edges (311) of the cavities (31), as viewed by the observer, form irregular polygons, or
- the upper edges (311) of the cavities (31), as viewed by the observer, have a curved profile and the cavities (31) are nested one inside the other.

2. The display device (1) according to claim 1, wherein adjacent cavities (31) each have a different configuration.

3. The display device (1) according to any one of the preceding claims, wherein the light sources (32) have a regular arrangement.

4. The display device (1) according to any one of the preceding claims, wherein the walls (310) of the cavities (31) are rounded and the cavities (31) are configured to reflect the light (L) emitted by the light sources (32) toward the display panel (2).

5. The display device (1) according to claim 4, wherein the light sources (32) are side-emitting light-emitting diodes.

6. The display device (1) according to claim 4, wherein the side-emitting light-emitting diodes emit light (L) on all sides.

7. A means of transportation (100) comprising a display device (1) according to any one of the preceding claims.

## Revendications

1. Dispositif d'affichage (1) comportant un panneau d'affichage (2) et un rétroéclairage (3) pour le panneau d'affichage (2), dans lequel le rétroéclairage (3) comprend :
- un réflecteur (30) comportant une pluralité de cavités réfléchissantes (31), dans lequel les parois (310) des cavités (31) sont conçues de manière à perturber la structure en treillis du réflecteur (30) résultant de la disposition des cavités (31) ; et
- une pluralité de sources lumineuses (32) disposées dans les cavités (31), **caractérisé en ce que**
- les bords supérieurs (311) des cavités (31), du point de vue de l'observateur, forment des polygones irréguliers ou
- les bords supérieurs (311) des cavités (31), du point de vue de l'observateur, ont un parcours incurvé et les cavités (31) sont imbriquées les unes dans les autres.

2. Dispositif d'affichage (1) selon la revendication 1, dans lequel les cavités adjacentes (31) sont chacune configurées différemment.

3. Dispositif d'affichage (1) selon l'une quelconque des revendications précédentes, dans lequel les sources lumineuses (32) ont une disposition régulière.

4. Dispositif d'affichage (1) selon l'une quelconque des revendications précédentes, dans lequel les parois (310) des cavités (31) sont arrondies et les cavités (31) sont conçues pour réfléchir la lumière (L) émise par les sources lumineuses (32) en direction du panneau d'affichage (2).

5. Dispositif d'affichage (1) selon la revendication 4, dans lequel les sources lumineuses (32) sont des diodes électroluminescentes à émission latérale.

6. Dispositif d'affichage (1) selon la revendication 4, dans lequel les diodes électroluminescentes à émission latérale émettent de la lumière (L) dans toutes les directions.

7. Moyen de transport (100) avec un dispositif d'affichage (1) selon l'une quelconque des revendications précédentes.
